# EUROPEAN PATENT SPECIFICATION

(11) **EP 0 578 360 B1**
(45) Date of publication and mention of the grant of the patent: **13.12.1995**
(21) Application number: 93304155.0
(22) Date of filing: 28.05.1993
(51) Int. Cl.: A47J 37/06

(54) **Griller**
Grillvorrichtung
Appareil à griller

(30) Priority: 10.07.1992 AU 3476/92
(43) Date of publication of application: 12.01.1994
(73) Proprietor: BREVILLE PTY LTD., Pyrmont, New South Wales 2009 (AU)
(72) Inventor: O'Brien, William John, Vaucluse 2030, New South Wales (AU); McClean, Stephen John, Beverly Hills 2209, New South Wales (AU)
(74) Representative: Tribe, Thomas Geoffrey

(56) References cited:
- BE-A- 629 673
- CH-A- 197 532
- CH-A- 211 890
- DE-A- 3 408 555
- DE-U- 8 709 032
- US-A- 2 290 658
- US-A- 3 623 423
- US-A- 5 036 180

## Description

The present invention relates to a griller for the grilling of foodstuffs such as steaks by means of an electric heating element. The griller the subject of the invention can be used both outdoors or indoors.

Many forms of griller are in use domestically and with at least some of them a problem arises as to the disposal of melted fat and liquid emerging from the foodstuff being cooked. If this fat is allowed to come into contact with the means of heating the griller smoke is produced, as are carcinogenic compounds. While forms of griller consisting of a grid arranged to heat an article of food to be grilled, beneath which and spaced from the grid, is an electric heating element onto which fat and liquids can fall are very popular the problems referred to above have been recognised and addressed in the specification of US-A-5,036,180 which is described in the abstract accompanying the specification as:-
"An electric grill-simulated charcoal broiler for use indoors with smoke, grease/fire abatement. The iron grid is somewhat rectangular shaped with horizontal elongated grooves positioned therein for searing the meat and elongated slots to receive and direct the ensuing greases and juices through parallel openings to a water pad positioned thereunder. The electrical grill heating element positioned directly beneath the iron grid bars is not exposed to the openings. The grill element has sufficient width to impart the heat directly to the meat by way of convection and conduction. The overall unit is simple in construction composed of readily detached or removable components for accessibility and sanitation and is self-contained and may be portable".

In this construction the electric heating elements are positioned directly beneath the iron grid bars and fat is carried off in grooves formed in the upper surfaces of the bars.

US-A-2,290,658 discloses an electrical heated cooking grill, according to the preamble of claim 1, utilising electrically heated grid members located above a combined support and grease pan. A second embodiment takes elaborate steps to provide heat control by providing a hollow structure which contains a fusible metal. In operation the total heat of fusion of metal provides heat control; however this is a complex and costly solution to the problem, and the present invention sets out therefore to solve the problem in a simple and more cost effective manner.

DE-U-8709032 discloses an electric grilling plate having apertures underneath via which air can flow into the device through an air slot (e) at the bottom of the housing and then out through side outlets (c). However this cannot be used with an open grill system having slots.

Accordingly, the present invention provides a griller having a substantially horizontally extending grill member to support food while being grilled, the grill member consisting of alternating bars and slots the bars being made of aluminium, aluminium alloy or a substance having similar heat transmitting properties therebeing arranged under the grill member an elongated electric heating element that is accommodated within a groove formed on the underside of the grill member, whereby fats and liquids emerging from food being cooked on the grill member are prevented from coming into contact with the electric heating element, electric plug receiving means connected to said electric heating element directly and without intervention of a thermostat, the heating element and the grill member being constructed and arranged so that heat from the heating element is distributed more or less evenly over the surface of the grill member, the grill member being removably supported on a container that in use underlies the grill member and acts to catch fat and liquids from the food being grilled, characterised in that a circumferential gap is provided between an outer wall of said container and the periphery of the grill member, the width and position of said gap being chosen so as to permit a flow of air transversely through the gap into the space beneath the grill member to control the temperature of the heating element and grill member and prevent thermal run away.

Other preferred features are disclosed in dependent claims 2-7.

In order that the nature of the invention may be better understood a preferred form thereof is hereinafter described by way of example with reference to the accompanying drawings in which:-
Figure 1 is a side elevation of a griller according to the invention;
Figure 2 is a sectioned perspective view showing one half of the griller of Figure 1; and
Figure 3 is an underneath plan view of the griller.

The griller in the preferred form consists of a grill member 10 which is in the form of an aluminium casting. Alloys of aluminium may be used or any other material having a similar capacity for heat transfer. For the effective operation of the griller it is important that heat from the electric heater element described below be distributed more or less evenly over the surface of the grill member 10.

The shape and configuration of the grill member can be readily seen from the drawings and it will be appreciated that this serves not only to support food being grilled but also to permit fats and liquids emerging from the food to pass through the grill member.

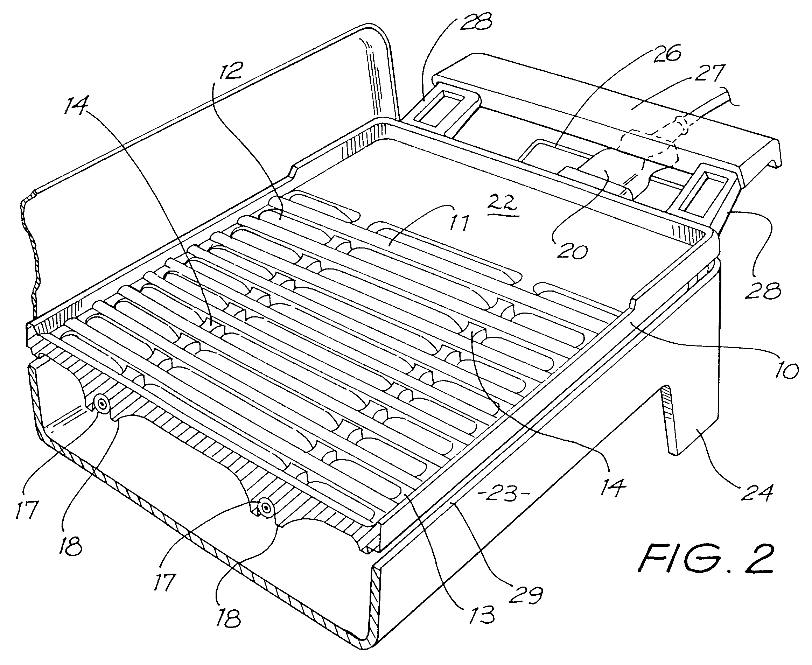

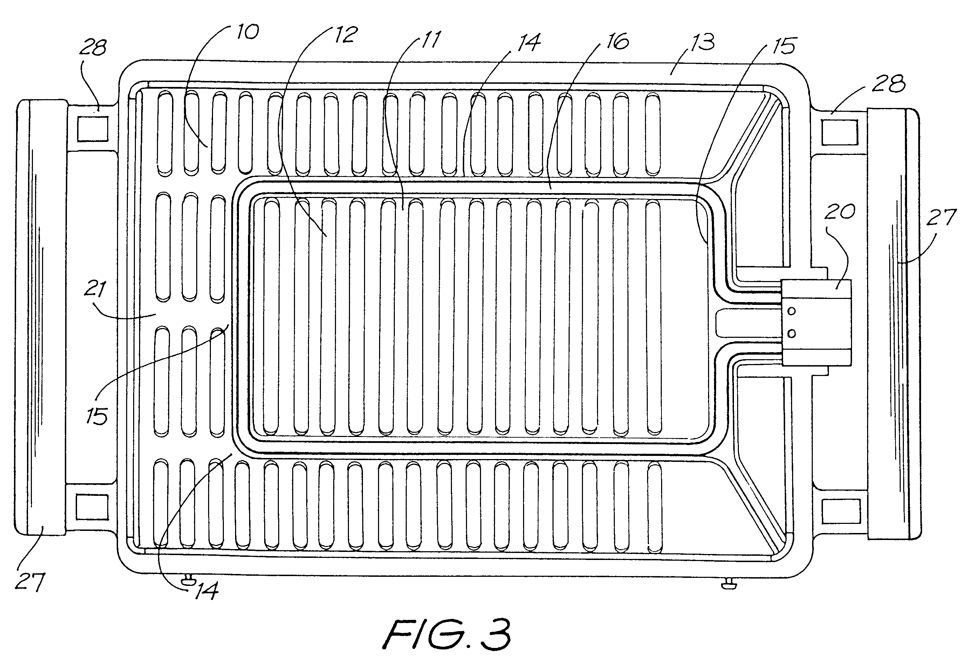

In the embodiment illustrated the grill member 10 consists in a series of parallel bars 11 separated by slots 12 and joined at their ends by a surrounding portion 13 and having two parallel longitudinally extending members 14 and two transversely extending members 15 which between them receive on their undersides an electric heating element 16. This is accommodated in a groove 17 on the underside of the members 14 and 15 as is best seen in Figure 3 this is held in place by staking (not seen). Figure 2 shows that the heating element 16 is largely shielded from fat and liquids flowing from foodstuffs being cooked. The upper surfaces of the bars 11 are slightly rounded to assist in effecting a fast run off of fats and liquids from food being grilled. The edges 18 of the groove 17 extend below the heating element 16 to shed fat or liquid emerging from food being grilled and preventing its reaching the heating element 16. The heating element 16 is connected to an electric socket 20 into which a standard plug may be inserted. The electric heater element 16 which, for a griller of the size indicated may be a 1600 watt element as this has been found to maintain the temperature of the grill member at about 280°C where the weight of the grill member is about 3.5 kg.

In most electric grillers overheating is prevented by the incorporation of a thermostat in the electrical circuitry. This, however, has the disadvantage that the griller cannot be immersed in water for cleaning. A griller according to the present invention dispenses with a thermostat and temperature control is achieved by careful design which achieves a balance between the heat output of the heater element and the mass of metal in the grill member, and by proper choice of the size of the air gap 29 thermal runaway being guarded against by the provision of air circulation in the manner described below. The fact that the grill member can be totally immersed in water for cleaning is a very substantial practical advantage.

The arrangement of the heater element 16 in the configuration shown in Figure 3 ensures substantially even heating of the grill member over the whole of its surface. It is to be noted that in use the highest temperature achieved in the heating element is at the part immediately opposite the plug 20 and to help dissipate heat at this point additional metal is included by means of the member 21.

The grill member 10, at one end, has a portion in the form of a plate 22. This is arranged to have a temperature of about 200°C which acts as a cool spot for the cooking of materials such as tomatoes onions or mushrooms which require a lower cooking temperature than, for example, does a steak. The temperature in this area is reduced by providing the heating element with "cold pins" that is to say that the heating element proper is terminated a short distance before the plug 20 and is connected to the plug by low resistance conductors. The whole of the grill member 10 is covered with PTFE which while being capable of resisting cooking temperatures also greatly facilitates cleaning.

The grill member 10 is supported on the periphery of a shallow container 23 which serves to catch fat and liquids from food being grilled. This can either be used as a receptacle for water or absorbent material thus providing two different means of dealing with fat and liquid from the food being cooked. The bottom of the container 23 may be coated with a heat reflecting coating or covered with aluminium foil to reflect heat back to the grill member 10 with a view to preventing the temperature of any surface on which the container is placed from being heated to an unacceptable temperature. The container 23 is provided with legs 24 which act to support it so that there is a space between the container and any table top on which the griller is placed and the temperature of the table top may be controlled by making the legs 24 shorter or longer.

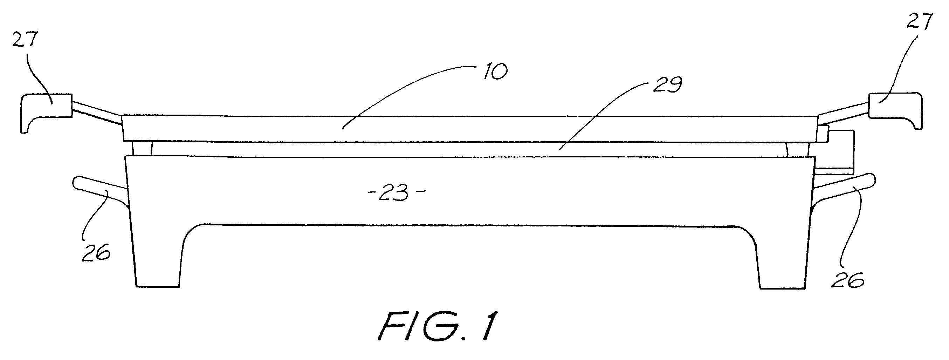

As is best seen in Figures 1 and 2, the periphery of the grill member 10 is separated from the peripheral edge of the container 23 by an air gap 29. This air gap has a most important function in permitting the inflow of air to cool the grill member 10 and protect the heating element from thermal run away without the necessity for incorporating a thermostat in the construction. The width of the gap 29 must be correctly chosen so that the grill member is not cooled unduly or insufficiently. For any particular griller the correct width of this gap can only be determined by experiment. This form of temperature control of the grill member has another advantage and that is that if an item of food is placed on the grill member it immediately reduces the surface temperature of the bars 11 and thus the searing effect on the food. However, with the present design the placing of, for example, a steak on the grill member blocks off some of the slots between bars 11 thus diminishing the flow of air through the grill member and reducing the drop in temperature caused by placing the steak on the grill member.

After the grilling of a foodstuff has been completed the plug 20 may be removed and, by means of the handles 26, the whole container and griller may be taken to the table and the food served directly from the grill member 10.

The grill member 10 is provided at each end with a ceramic or phenolic handle 27 which is spaced apart from the grill member by supports 28 which are made hollow to minimise the transmission of heat from the grill member to the handle. After removal of the plug 20 the grill member may be removed by means of the handles 27 and placed in water for washing. As pointed out above this is possible due to the absence of a thermostat in the construction.

In an alternative form of construction not illustrated the heater 13 may be cast into the grill members 11 and 12 instead of being held in position by staking as illustrated.

The embodiment of the invention described above is merely illustrative of one form of embodiment of the invention the construction of the griller being capable of variation within the general scope of the invention as defined above.

## Claims

1. A griller having a substantially horizontally extending grill member (10) to support food while being grilled, the grill member consisting of alternating bars (11) and slots (12) the bars (11) being made of aluminium, aluminium alloy or a substance having similar heat transmitting properties, there being arranged under the grill member (10) an elongated electric heating element (16) that is accommodated on the underside of the grill member (10), electric plug receiving means (20) connected to said electric heating element (16) directly and without intervention of a thermostat, the heating element (10) and the grill member (16) being constructed and arranged so that heat from the heating element is distributed more or less evenly over the surface of the grill member (10), the grill member (10) being removably supported on a container (23) that in use underlies the grill member (10) and acts to catch fat and liquids from the food being grilled, characterised in that the element is accommodated within a groove (17) formed on the underside of the grill member (10) so that the heating element is protected from fat falling from above while leaving its underside exposed and that a circumferential gap is provided which extends round the periphery of the grill member (10), the width and position of the gap being chosen so that in use the gap acts as an inlet which permits a flow of air transversely in through the gap into the space beneath the grill member so that it can flow past the exposed underside of the heating element (16) and through the slots (12) to control the temperature of the heating element (16) and grill member (10) and prevent thermal run away.

2. A griller as claimed in claim 1 wherein the groove (17) formed on the underside of the grill member is defined by sides (18) that extend below the heating element (16) to promote the shedding of fats and liquid from food being cooked to prevent it coming into contact with the heating element (10).

3. A griller as claimed in claim 1 having an area (22) intended for the cooking of foodstuffs at a lower temperature, the lower temperature in this area being achieved by termination of the heater element a short distance before the electrical plug receiving means.

4. A griller as claimed in claim 1 wherein both the container (23) and the grill member (10) are provided at each end with handles (26,27) of insulating material whereby either the container together with the grill member may be placed on the table for direct service of food from the grill member or the grill member may be removed from the container for washing.

5. A griller as claimed in claim 1 wherein the upper surfaces of the bars (11) are slightly rounded to expedite the flow of fats and liquid from a foodstuff being grilled.

6. A griller as claimed in claim 1 wherein the power consumption of the heater element (16) is 1600 watts and the weight of the grill member about 3.5 kg.

7. A griller as claimed in claim 1 wherein the container is provided with legs (24) that support the container at a distance above a table surface to control the temperature of the table surface during operation of the griller.

## Patentansprüche

1. Grillvorrichtung, beinhaltend ein sich im wesentlichen horizontal erstreckendes Grillteil (10), um Lebensmittel während des Grillens zu halten, wobei das Grillteil abwechselnd aus Stangen (11) und Schlitzen (12) besteht, wobei die Stangen (11) aus Aluminium, Aluminiumlegierung oder einer Substanz mit ähnlichen Wärmeleiteigenschaften hergestellt sind, ein unter dem Grillteil (10) angeordnetes längliches elektrisches Heizelement (16), das an der Unterseite des Grillteils (10) angebracht ist, ein Mittel zum Aufnehmen eines elektrischen Steckers (20), das mit dem elektrischen Heizelement (16) direkt und ohne Zwischenschaltung eines Thermostats verbunden ist, wobei das Heizelement (16) und das Grillteil (10) so aufgebaut und ausgestaltet sind, daß die Hitze von dem Heizelement mehr oder weniger gleichmäßig auf der Oberfläche des Grillelements (10) verteilt wird, wobei das Grillteil (10) abnehmbar auf einem Behälter (23) gehalten ist, der unter dem Grillteil (10) liegt und dazu dient, Fett und Flüssigkeiten der gegrillten Lebensmittel aufzufangen, **dadurch gekennzeichnet**, daß das Element innerhalb einer Nut (17), die in die Unterseite des Grillteils gebildet ist, untergebracht ist, so daß das Heizelement vor von oben herabfallendem Fett geschützt ist, während seine Unterseite freiliegend bleibt, und daß ein Spalt am Umfang vorgesehen ist, der um den Rand des Grillteils (10) herum verläuft, wobei die Breite und Position des Spaltes so gewählt sind, daß der Spalt bei Gebrauch als Einlaß wirkt, der einen Luftstrom quer durch den Spalt in den Raum unter das Grillteil zuläßt, so daß er vorbei an der freiliegenden Unterseite des Heizelements (16) und durch die Schlitze (12) strömen kann, um die Temperatur des Heizelements (16) und des Grillteils (10) zu steuern und eine Überhitzung zu verhindern.

2. Grillvorrichtung nach Anspruch 1, wobei die in der Unterseite des Grillteils (10) gebildete Nut (17) durch Seiten (18) definiert ist, die sich unterhalb des Heizelements (16) ausdehnen, um das Abfließen von Fett und Flüssigkeit der gekochten Lebensmittel zu fördern, um zu verhindern, daß es in Kontakt mit dem Heizelement (10) kommt.

3. Grillvorrichtung nach Anspruch 1 mit einem Gebiet (22), das für das Kochen von Lebensmitteln bei einer geringeren Temperatur vorgesehen ist, wobei die geringere Temperatur in diesem Gebiet dadurch erzielt wird, daß das Heizelement kurz vor dem Mittel zum Aufnehmen eines elektrischen Steckers endet.

4. Grillvorrichtung nach Anspruch 1, wobei sowohl der Behälter (23), als auch das Grillteil (10) an jedem Ende mit Griffen (26, 27) aus isolierendem Material versehen sind, wodurch entweder der Behälter zusammen mit dem Grillteil auf den Tisch gestellt werden kann, um Lebensmittel direkt von dem Grillteil zu servieren, oder das Grillteil zum Abwaschen vom Behälter abgenommen werden kann.

5. Grillvorrichtung nach Anspruch 1, wobei die obenliegenden Oberflächen der Stangen (11) leicht abgerundet sind, um das Fließen von Fett und Flüssigkeit aus dem gegrillten Lebensmittel zu beschleunigen.

6. Grillvorrichtung nach Anspruch 1, wobei der Energieverbrauch des Heizelements (16) 1600 Watt und das Gewicht des Grillteils ca. 3,5 kg beträgt.

7. Grillvorrichtung nach Anspruch 1, wobei der Behälter mit Füßen (24) versehen ist, die den Behälter auf Entfernung oberhalb einer Tischoberfläche halten, um die Temperatur der Tischoberfläche während des Betriebs der Grillvorrichtung zu steuern.

## Revendications

1. Gril ayant un élément de gril (10) s'étendant sensiblement horizontalement pour supporter les aliments pendant qu'on les grille, l'élément de gril étant constitué par des barreaux (11) et des fentes (12) en alternance, les barreaux (11) étant faits d'aluminium, d'un alliage d'aluminium ou d'un substance ayant des propriétés de transmission de chaleur analogues, cependant qu'au-dessous de l'élément de gril (10), est agencé un élément chauffant électrique (16) de forme allongée qui est logé dans une rainure formée dans la face inférieure de l'élément de gril (10), des moyens (20) de réception d'une fiche électrique qui sont connectés directement à l'élément chauffant électrique (16) et sans intervention d'un thermostat, l'élément chauffant (10) et l'élément de gril (16) étant construits et agencés de manière que la chaleur émise par l'élément chauffant soit répartie plus ou moins uniformément sur toute la surface de l'élément de gril (10, l'élément de gril (10) étant supporté de façon amovible sur un conteneur (23) qui, en utilisation, se trouve au-dessous de l'élément de gril (10) et agit de manière à recueillir la graisse et les liquides issus de l'aliment à griller, caractérisé en ce que l'lément est logé dans une rainure (17) formée dans la face inférieure de l'élément de gril (10), de sorte que l'élément chauffant est protégé de la graisse qui tombe d'au-dessus tout en laissant sa face inférieure exposée et en ce qu'il est prévu une fente périphérique qui s'étend sur la périphérie de l'élément de gril (10), la largeur et la position de la fente étant choisies de manière qu'en utilisation, la fente se comporte comme une entrée d'air qui permet à l'air de s'écouler transversalement et de pénétrer à travers la fente pour aboutir dans l'espace situé au-dessous de l'élément de gril, de sorte qu'il peut circuler le long de la face inférieure libre de l'élément chauffant (26) et à travers les fentes (12) pour maîtriser la température de l'élément chauffant (16) et de l'élément de gril (10) et pour éviter une fuite thermique.

2. Gril selon la revendication 1, dans lequel la rainure (17) formée sur la surface inférieure de l'élément de gril est définie par des côtés (18) qui se prolongent au-dessus de l'élément chauffant (16) pour favoriser la déviation des graisses et du liquide issus des aliments en cours de cuisson pour les empêcher d'entrer en contact avec l'élément chauffant (10).

3. Gril selon la revendication 1, possédant une zone (22) destinée à la cuisson d'aliments à une plus basse température, la plus basse température dans cette zone étant obtenue en terminant l'élément chauffant à une petite distance avant les moyens de réception de la fiche électrique.

4. Gril selon la revendication 1, dans lequel le conteneur (23) et l'élément de gril (10) sont munis à chaque extrémité de poignées (26, 27) en matière isolante, de sorte que soit le conteneur, complété de l'élément de gril, peut être placé sur la table pour servir les aliments en les prenant directement sur l'élément de gril, soit l'élément de gril peut être séparé du conteneur pour le lavage.

5. Gril selon la revendication 1, dans lequel les surfaces supérieures des barreaux (11) sont légèrement arrondies pour accélérer l'écoulement des graisses et du liquide issus des aliments en cours de grillage.

6. Gril selon la revendication 1, dans lequel la consommation de puissance de l'élément chauffant (16) est de 1600 watts et le poids de l'élément de gril est d'environ 3,5 kg.

7. Gril selon la revendication 1, dans lequel le conteneur est muni de pieds (24) qui supportent le conteneur à une certaine distance au-dessus de la surface d'une table pour limiter la température de la surface de la table pendant le fonctionnement du gril.
